# EUROPEAN PATENT APPLICATION

(11) **EP 4 793 149 A1**
(43) Date of publication of application: **19.08.2026**
(21) Application number: 26158233.2
(22) Date of filing: 12.02.2026
(51) Int. Cl.: B62D 37/02, B62D 35/00

(54) **MOTOR VEHICLE PROVIDED WITH A REAR AERODYNAMIC ELEMENT AND WITH AN ADJUSTMENT SYSTEM FOR VARYING THE VERTICAL AERODYNAMIC LOAD GENERATED BY SUCH ELEMENT**

(30) Priority: 14.02.2025 IT 202500002820
(71) Applicant: FERRARI S.p.A., 41100 Modena (IT)
(72) Inventor: SEDDA, Salvatore, 41100 MODENA (IT); MARIELLA, Luciano, 41100 MODENA (IT); SABBATUCCI, Simone, 41100 MODENA (IT)
(74) Representative: Studio Torta S.p.A.

(57) **Abstract**

A motor vehicle (1), in particular a sports car, has a body (2) with a roof surface (23) provided with a rear edge (24) in front of an uncovered volume (8), in turn arranged in front of an aerodynamic element (25) impinged on, in use, by an airflow (F3) which is generated by the advancement of the motor vehicle (1) and detaches from the rear edge (24) so as to flow through the uncovered volume (8); the motor vehicle (1) further has an adjustment system (40) for varying the vertical aerodynamic load of the aerodynamic element (25), by adjusting the direction of incidence of the airflow (F3); such adjustment is performed by moving at least one portion (48) of a wing (43), arranged in a position longitudinally intermediate between the rear edge (24) of the roof surface (23) and a front end (39) of the motor vehicle (1), and in a position vertically facing and spaced apart with respect to a body surface (45), so as to define a duct (47) which, in use, is got through by air (F1) that will then form the airflow (F3) in the uncovered volume (8).

## Description

### CROSS-REFERENCE TO RELATED APPLICATIONS

This patent application claims priority from Italian patent application no. 102025000002820 filed on February 14, 2025, the entire disclosure of which is incorporated herein by reference.

### TECHNICAL FIELD

The invention relates, in general, to a motor vehicle and, in particular, to a motor vehicle provided with a rear aerodynamic element, which is defined by an airfoil or by a so-called spoiler and, although being fixed with respect to a body of the motor vehicle, exerts a vertical aerodynamic load which can be adjusted.

Within this background, the invention relates, more in particular, to a sports car.

### PRIOR ART

As is known, in the field of motor vehicles, in particular with regard to sports cars, the need is felt to design and implement innovative solutions with respect to the usual standards, in particular to improve the overall aerodynamic performance.

More in particular, the need is felt to adopt a rear aerodynamic element, defined for example by an airfoil, which is coupled in a fixed relative position with respect to the body of the motor vehicle, but exerts a vertical aerodynamic load which can anyway be varied by means of a suitable adjustment system.

Aim of the present invention is thus to satisfy the needs set forth above, preferably so that the aforementioned adjustment system is relatively simple from the constructive point of view.

### DESCRIPTION OF THE INVENTION

The aforementioned object is achieved by a motor vehicle as defined in claim 1.

The dependent claims define preferred embodiments of the invention.

### BRIEF DESCRIPTION OF THE DRAWINGS

In the following, preferred embodiments of the invention will be described for a better understanding of the same, by way of non-limiting example and with reference to the accompanying drawings, wherein:
- Figure 1 is a front perspective view of a first preferred embodiment of the motor vehicle according to the teachings of the present invention,
- Figure 2 shows the motor vehicle of Figure 1, in a partial manner, in a cutaway rear perspective view according to a longitudinal vertical section plane,
- Figures 3 and 4 are diagrams relative to a cross-section of the motor vehicle according to the above-mentioned section plane, and show an adjustment system arranged in two different operating positions, respectively, and
- Figure 5 is similar to Figures 3 and 4 and relates to a further preferred embodiment of the present invention, in which the adjustment system is provided in a different longitudinal position with respect to what is shown in the embodiment of Figures 1-4.

### EMBODIMENTS OF THE INVENTION

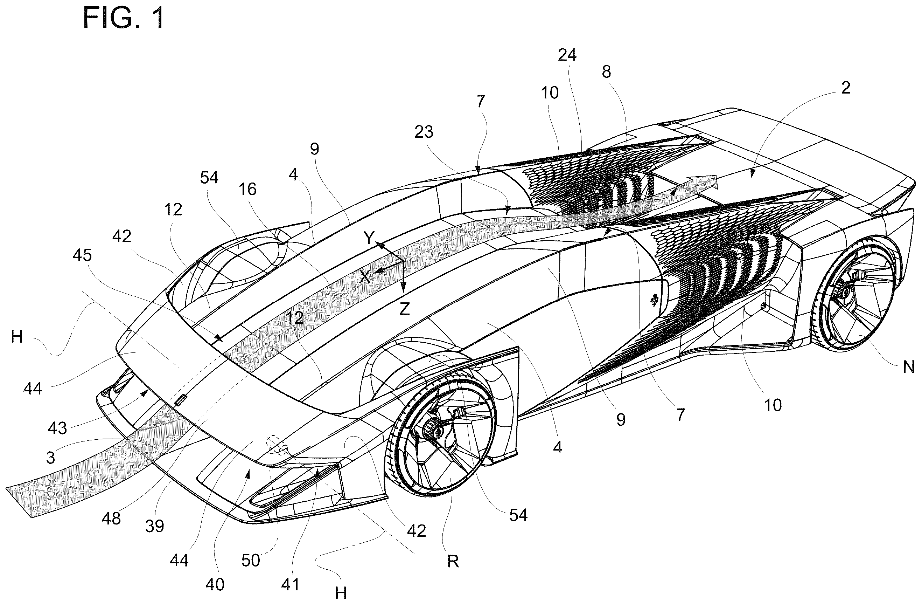

In Figure 1, reference numeral 1 is used to indicate a motor vehicle, defined in particular by a sports car. As all motor vehicles, the motor vehicle 1 has a plurality of wheels, in particular a pair of front wheels R and a pair of rear wheels N.

The motor vehicle 1 has a reference system defined by a set of three Cartesian axes; such reference system has, in detail, a roll axis X, a pitch axis Y, and a yaw axis Z. The roll axis X coincides with a longitudinal axis, namely with a direction in which the motor vehicle 1 normally advances. The pitch axis Y is horizontal, with reference to the normal conditions of use of the motor vehicle 1, and is orthogonal to the roll axis X. The yaw axis Z is orthogonal to both axes X, Y and has at least one vertical component.

For clarity, in this description, expressions such as front, at the front, rear, at the back, in front, behind, and the like, refer to the normal direction of advancement along the axis X of the motor vehicle 1. Similarly, expressions such as upper, lower, top, bottom, and the like, refer to the normal conditions of use of the motor vehicle 1, with the wheels R and N arranged on a roadbed.

The motor vehicle 1 comprises a body, indicated as a whole by reference numeral 2. Here and in the following, the term "body" means a set of the chassis, defining the structural frame of the motor vehicle 1, and of the bodyshell or outer skin, carried by the chassis and defining an outer profile of the motor vehicle 1.

The body 2 has a floor 3 which, in particular, defines the lower base of the motor vehicle 1 and therefore faces a roadbed during the use of the motor vehicle 1.

In the illustrated preferred example, the body 2 comprises a pair of shell portions 4, preferably identical to each other, coupled to the floor 3 at respective opposite side ends according to the axis Y.

Preferably, the shell portions 4 internally define, together with the floor 3, respective passenger compartments 7 which are distinct from each other. For example, each passenger compartment 7 is understood as an environment adapted as a whole to accommodate a driver or a passenger in appropriate conditions. Therefore, the expression "passenger compartment" excludes cramped environments and, more precisely, excludes environments inappropriate for accommodating the driver in a posture typically fit for driving. Advantageously, both passenger compartments 7 are equipped to accommodate the driver, therefore they both comprise, for example, respective seats and respective driving instruments (steering wheel, pedals, etc.). Clearly, when the driving instruments in one of the passenger compartments 7 are in use, the other ones are disabled for safety. In this manner, the driver can choose whether to drive on the right or left side of the motor vehicle 1, by simply entering the desired passenger compartment 7.

Preferably, the shell portions 4 are separate from each other, i.e. do not have parts in common or do not intersect with each other.

Furthermore, at the back, the outer surface of the body 2 bounds an uncovered volume 8, namely a volume that is directly exposed to the outside air during use. In the illustrated specific solution, the uncovered volume 8 is arranged according to the axis Y between the shell portions 4. In other words, the uncovered volume 8 separates the shell portions 4 from each other along the axis Y.

Specifically, the shell portions 4 comprise respective front heads 9, which define the passenger compartments 7, and respective rear tails 10, which extend behind the heads 9 and as an extension of the latter in a direction parallel to the axis X, substantially with continuity. For example, the tails 10 define respective inner volumes that are separate from the corresponding passenger compartments 7, along the axis X, by means of corresponding walls or panels, not illustrated.

For example, the tails 10 can be permeable to air, for example can be porous, and/or can be provided with slits and/or openings to allow a flow of air, or more in general for a flow of gas (in this regard, by way of example, the tails 10 could be provided with outlet openings for exhaust gases produced by an internal combustion engine, not illustrated, installed on the motor vehicle 1).

Preferably, in the illustrated embodiment, the access to the passenger compartments 7 is enabled by doors or wings 12 (Figure 1) which are movable and are part of the shell portions 4. For example, the wings 12 are hinged, in particular at the front, with respect to the remaining part of the body 2, in a manner not illustrated, so that the wings 12 can be rotated upwards and forwards and thus allow access to the respective passenger compartments 7 from above.

Some areas of the shell portions 4 can be at least partially transparent to allow the direct visibility of the areas on the outside of the motor vehicle 1 by the driver from the inside of the passenger compartments 7. This is not strictly necessary, as the driving of the motor vehicle 1 could anyway occur by autonomous driving or by means of a virtual reality viewer applicable to the driver and receiving information of visual type relative to the outside of the motor vehicle 1 from cameras suitably positioned on external areas of the body 2.

The body 2 further comprises an intermediate element 16 which is arranged between the shell portions 4 along the axis Y, and in front of the uncovered volume 8 along the axis X, so as to structurally connect the shell portions 4 to each other.

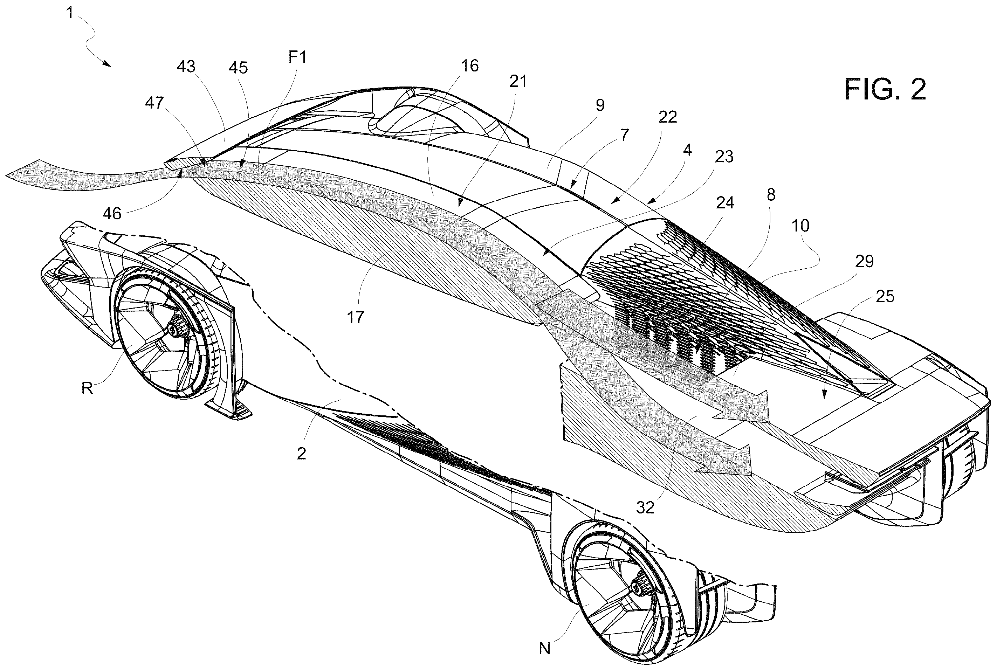

Preferably, the intermediate element 16 is configured to put the passenger compartments 7 in communication, from the visual point of view and/or from the point of view of the air circulation. For example, the intermediate element 16 defines an inner passage 17 (Figure 2) that extends along the axis Y between two openings obtained on the shell portions 4, respectively, to put the passenger compartments 7 in communication both from the visual point of view and from the point of view of the air circulation. In the illustrated preferred solution, the passage 17 is relatively small, therefore an actual physical movement of the driver from one passenger compartment 7 to the other is not allowed, if not by getting out of the motor vehicle 1. In any case, for the purposes of the present invention, according to alternatives not illustrated, the passage 17 and the two passenger compartments 7 can be replaced by one single passenger compartment, as in the common motor vehicles.

With reference to Figure 2, the intermediate element 16 and the shell portions 4 have respective upper surfaces 21, 22, which extend as a prolongation of each other along the axis Y. The surfaces 21 and 22 as a whole define, outwards, a roof surface 23, namely an outer surface of the motor vehicle 1 provided above the passenger compartment, or the passenger compartments 7 in the illustrated specific case, and essentially facing upwards.

Along the axis X, the roof surface 23 (in particular the surface 21 of the intermediate element 16) ends with a rear edge 24. In the illustrated specific solution, the rear edge 24 is arranged, along the axis X, substantially at the rear ends of the heads 9. Therefore, the uncovered volume 8 is bounded laterally (namely along the axis Y) by the tails 10 and at the front by the rear edge 24. In general, along the axis X, the rear edge 24 defines a separation line between the roof surface 23 and the uncovered volume 8, regardless of the presence of the tails 9.

According to the present invention, the motor vehicle 1 comprises a rear aerodynamic element 25, which is carried by the body 2 behind the uncovered volume 8, in a position such to be lapped by air that flows longitudinally along the roof surface 23 and detaches from the latter at the rear edge 24. The term "aerodynamic element" means any element of the motor vehicle 1 that is configured to exert a vertical aerodynamic load, namely a load directed along the axis Z downwards, on the body 2 and consequently on the wheels R and/or N, when it is lapped by air that substantially flows along the axis X backwards, thanks to the advancement of the motor vehicle 1.

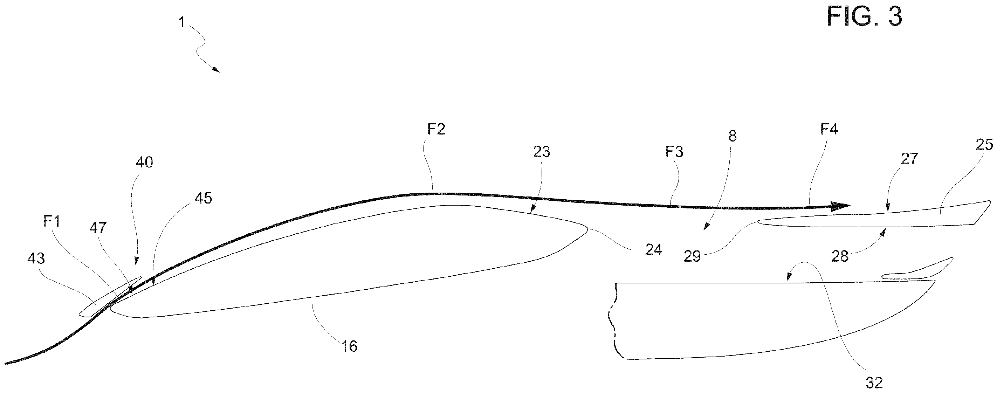

With reference to Figure 3, in particular, the aerodynamic element 25 is defined by an airfoil, or a wing, namely an element having an upper surface 27 and a lower surface 28, which join to each other at the front at a leading edge 29 (which thus faces the rear edge 24 of the roof surface 23).

The aerodynamic element 25 is arranged in a position such that the leading edge 29 and the surface 28 are vertically spaced apart from a body surface 32 which is arranged underneath, and in the illustrated specific solution, is supported by the tails 10. Alternatively, the aerodynamic element 25 could be coupled to the body 2 by means of one or more support legs.

In particular, the body surface 32 also defines the bottom of the uncovered volume 8.

Preferably, the aerodynamic element 25 is firmly fixed with respect to the body surface 32, without the possibility of relative adjustment movements. Furthermore, the aerodynamic element 25 is devoid of adjustments that can vary its shape and thus its aerodynamic properties (for example, it is devoid of movable parts). Therefore, the position and the contour of the aerodynamic element 25 are invariant during the normal use of the motor vehicle 1.

In alternative to the airfoil, according to not illustrated variants, the aerodynamic element 25 is defined by a so-called spoiler, namely by one single fixed surface, which is part of the body 2 and contoured so as to exert the aforementioned vertical aerodynamic load, when it is lapped by air that flows due to the advancement of the motor vehicle 1.

The aerodynamic element 25, as well as the surfaces 21, 22, 23, etc. have shapes and positions which are symmetrical with respect to an ideal centerline plane that extends along the axes X and Z (namely a vertical longitudinal plane).

As is shown in Figure 1, preferably, the aerodynamic element 25 has a width, in a direction parallel to the axis Y, at least equal to that of the rear edge 24. In this manner, considering such direction, all the air that detaches from the rear edge 24 during the advancement of the motor vehicle 1 impinges on the aerodynamic element 25. More in particular, the aerodynamic element 25 has a width greater than that of the intermediate element 16, so as to protrude laterally with respect to the latter and thus be impinged on and lapped by air and/or exhaust gases that flow at the tails 10.

According to the present invention, with reference to Figure 1, the motor vehicle 1 comprises an adjustment system 40 which is independent of and distinct from the aerodynamic element 25 and is actuated (preferably in an automated manner by means of an electronic control unit, not illustrated, installed on the motor vehicle 1) so as to vary the vertical aerodynamic load exerted by the same aerodynamic element 25, all other operating conditions (humidity and temperature of the air; speed, weight distribution, and setting of the suspensions of the motor vehicle 1; etc.) being the same.

The adjustment system 40 is configured to vary the angle of incidence of the airflow (indicated by reference numeral F3 in Figures 3-5) that flows in the uncovered volume 8 and impinges on the aerodynamic element 25.

More in particular, the adjustment system 40 comprises a bridge structure 41, which is carried in a fixed point by the body 2, in an intermediate position along the axis X between the rear edge 24 of the roof surface 23 and a front end 39 of the motor vehicle 1. The bridge structure 41 is defined by two support legs 42 and by a wing 43, having two side ends 44 coupled to the body 2, respectively, by means of the support legs 42. The wing 43 is arranged in a position vertically spaced apart from a body surface 45, which is lapped by an airflow, indicated by reference numeral F1 in Figures 2-5.

As it will be described below, the air which is part of the flow F1 subsequently flows along the roof surface 23 and detaches at the rear edge 24 so as to flow through the uncovered volume 8 and, finally, impinge on and lap the aerodynamic element 25.

In greater detail, with reference to Figure 2, the wing 43 has a lower surface 46 which faces and is vertically spaced apart with respect to the body surface 45 so as to bound, together with the latter, a duct or nozzle 47, got through by the aforementioned flow F1. Obviously, also the bridge structure 41 and the body surface 45 (such as the roof surface 23 and the aerodynamic element 25) are symmetrical with respect to the ideal centerline plane.

In the embodiment of Figures 1 to 4, the body surface 45 is distinct from the roof surface 23 and is arranged further forward, along the axis X.

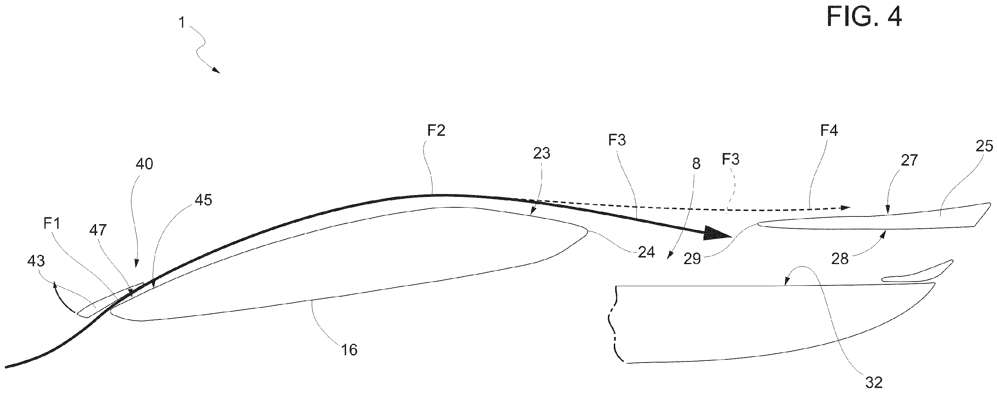

Preferably, the roof surface 23 defines an extension of the body surface 45 with continuity, without abrupt intermediate variations in curvature and/or slope, in order to avoid an undesired detachment of the flow and/or the formation of turbulences, and in general to avoid localized and concentrated alterations in the properties (speed, pressure, etc.) of the airflow, indicated by F2 in Figures 3 and 4, which flows from the duct 47 to the rear edge 24. By way of non-limiting example, when providing a standard windshield between the roof surface 23 and the duct 37, such windshield has an outer surface that is connected to the adjacent components without forming discontinuities (steps, grooves, etc.) and without abrupt variations in curvature and/or slope.

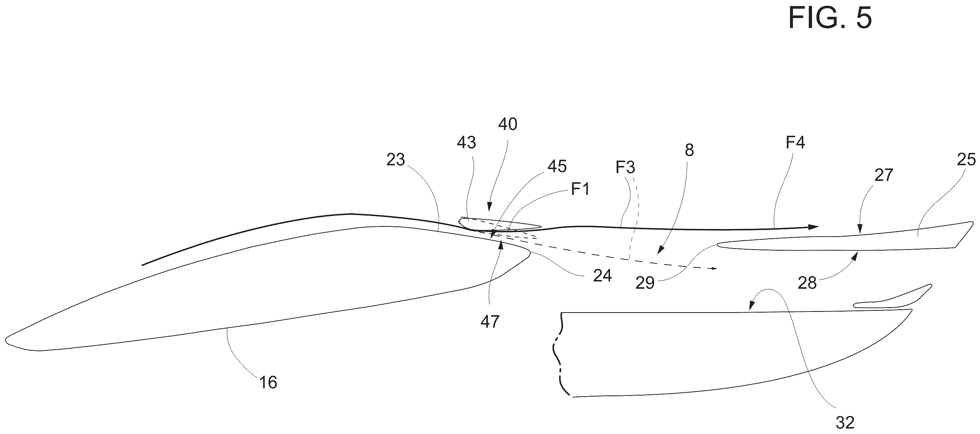

Whereas, in the embodiment schematized in Figure 5, the body surface 45 coincides with an area of the roof surface 23. In particular, the wing 43 is arranged at a rear end of the roof surface 23, namely immediately upstream of the rear edge 24. Here, in practice, the flow F2 schematized in Figures 3 and 4 is not present, as the flow F1, exiting the duct 47, immediately detaches from the rear edge 24 to form the flow F3: in any case, the function carried out by the wing 43 results to be similar to what provided for in the embodiment of Figures 1 to 4.

According to the present invention, the wing 43 is movable with respect to the body surface 45 so as to adjust the geometry (for example the height) of the duct 47, in order to vary the pressure and speed conditions of the flow F1, when the latter exits the same duct 47.

Such adjustment, preferably, is performed by means of a rotation of the wing 43 with respect to the body surface 45 about an axis H (Figure 1), which is parallel to the axis Y and, more preferably, is defined by a hinge which is fixed with respect to the body 2.

The new pressure and speed conditions set to the air at the duct 47 determine the pressure and speed conditions when the same air flows in contact with the roof surface 23, up to the detachment from the rear edge 24 (as mentioned above the airflow on the roof surface 23 has been indicated by reference numeral F2 in Figures 3 and 4, but it is the same air that previously got through the duct 47 and which is indicated as flow F1).

In turn, the pressure and speed conditions of the air at the rear edge 24 determine the average direction of the same air that is indicated as flow F3 in Figures 3-5 and which detaches from the rear edge 24 so as to flow through the uncovered volume 8 towards the aerodynamic element 25. The direction of exit of the flow F3 from the rear edge 24 corresponds, in practice, to the direction of incidence with which the same flow F3 impinges on the aerodynamic element 25. In turn, the variation obtained on the direction of incidence of the flow F3 affects the speed and pressure conditions of the air (indicated as flow F4 in Figures 3 and 5), which then laps the aerodynamic element 25. Finally, the variation of such conditions at the aerodynamic element 25 varies the aerodynamic load generated in vertical direction downwards, as a function of the contour that was assigned to the aerodynamic element 25 during the design phase.

For example, based on results of simulations performed on a computer, a rotation of the wing 43 by a few degrees is sufficient to obtain a variation in the aerodynamic load. In particular, by moving the wing 43 away from the body surface 45 (Figure 4), in particular by means of a rotation upwards about the axis H, the average direction of the flow F3 exiting the rear edge 24 is more inclined downwards with respect to the starting position shown in Figure 3 (and shown by dashed line also in Figure 4). In response to this variation in the direction of incidence downwards, the vertical aerodynamic load generated by the aerodynamic element 25 increases by effect of the greater relative aerodynamic incidence.

With regard to the mechanisms and the modes of rotation of the wing 43, these are not essential for the purposes of the present invention. By way of example, with reference to Figure 1, the entire wing 43 can be hinged to the support legs 42 about the axis H, at its side ends 44, whereas the support legs 42 are fixed with respect to the body 2; or, according to a variant, the entire bridge structure 41 can be hinged to the body 2, whereas the wing 43 is fixed to the support legs 42. Furthermore, according to a further variant, only a central portion 48 of the wing 43 could be rotatable about the axis H, with respect to the side ends 44, whereas the latter are fixed to the support legs 42. In this case, it is appropriate that the width of the rotatable portion 48, in a direction parallel to the axis Y, is at least equal to that of the rear edge 24 and/or to that of the aerodynamic element 25. In other words, it is appropriate that the variation in pressure and speed conditions of the air involves the entire width of the rear edge 24 and/or of the aerodynamic element 25.

It is highlighted that, in Figures 2-5, the different angular positions set for the wing 43 and the corresponding airflows are represented only in a schematic and qualitative manner, to visually highlight variations at graphic level.

Still with reference to what is schematically illustrated in Figure 1, the adjustment system 40 comprises at least one actuator 50, for example an electric actuator, controlled to move the wing 43 (possibly by means of a mechanical transmission, not illustrated). As mentioned above, the actuator 50 can be controlled in an automatic manner by an electronic control unit. In general, as mentioned above, the present invention is independent of the actuation mode for obtaining the movement of the wing 43, as it is independent of the control logics that are implemented in the aforementioned electronic control unit to establish the time instant, and possibly the extent of the adjustment, as a function of suitable input parameters (speed of the motor vehicle 1, external air conditions, settings set by the driver, etc.).

In the preferred solution shown in Figures 1 to 4, the bridge structure 41 is arranged in the proximity of the front end 39 of the motor vehicle 1. In particular, the bridge structure 41 preferably forms part of a front-end structure, commonly called just front end, which is part of the motor vehicle 1. More in particular, the bridge structure 41 can form part of a bumper, namely a structure designed to also meet safety needs in case of front impact (against other motor vehicles and/or against pedestrians) from the point of view of the used materials, of its position, of its dimensions, etc.

The fact of arranging the bridge structure 41 in the proximity of the front end 39 has the advantage of being able to receive, at the inlet of the duct 47, air that arrives at the front and directly in response to the advancement of the motor vehicle 1, without flow alterations generated by other components of the motor vehicle 1, so that the design of the surfaces for determining the outflow conditions of the same air in the duct 47 and downstream of the latter can result to be simpler.

Furthermore, in the illustrated specific example, the support legs 42 form part of respective mudguards 54 provided around the front wheels R. With this solution, for example, the support legs 42 could be designed in an integrated manner with the other parts of the mudguards 54 for optimizing the aerodynamic flows at the front wheels R and/or for obtaining a particularly attractive innovative appearance or an accentuated sporty appearance.

Based on the foregoing, the advantages of the motor vehicle 1 according to the invention, as defined in the appended claims, are evident.

First of all, although having an aerodynamic element 25 which is preferably fixed, it is possible to adjust its vertical aerodynamic load by changing the direction of incidence of the airflow which, in use, impinges on and laps the same aerodynamic element 25, thanks to the wing 43 of the adjustment system 40, in particular thanks to the movement of at least one portion 48 of the wing 43.

The solution is particularly advantageous from the aerodynamic point of view and also allows obtaining a revolutionary construction with respect to the known common motor vehicles. In any case, the adjustment system 40 of the present invention also applies to sports cars with a more traditional character, especially with regard to the embodiment of Figure 5, where the wing 43 is arranged above the passenger compartment.

Other secondary advantages of the invention have been set forth above with reference to the detailed characteristics which have been described, or are anyway evident to those skilled in the art, based on what described above with reference to the accompanying figures.

Finally, it is clear that modifications and variations can be made to the motor vehicle 1 according to the invention which anyway do not depart from the scope of protection defined by the claims.

In particular, the shape and the dimensions of the aerodynamic element 25, the shape and the dimensions of the wing 43 and thus the shape of the duct 47, the position of the bridge structure 41 along the axis X, the shape and the position of the support legs 42, etc. could be different from what illustrated by way of example.

## Claims

1. **-** Motor vehicle (1), in particular sports car, comprising:
- a body (2), which has a roof surface (23) provided with a rear edge (24) and defines an uncovered volume (8) behind said rear edge (24);
- an aerodynamic element (25) carried by said body (2) behind said uncovered volume (8) in a position such that it is impinged on by an airflow (F3) which, in use, is generated by the advancement of the motor vehicle (1) and detaches from said rear edge (24) to flow through said uncovered volume (8);
- an adjustment system (40) for varying the vertical aerodynamic load generated, in use, by said aerodynamic element (25) in response to said airflow (F3);
**characterized in that** said adjustment system (40) comprises a wing (43) carried by said body (2) and arranged:
- in a position longitudinally intermediate between said rear edge (24) and a front end (39) of the motor vehicle (1), and
- in a position vertically facing and spaced apart with respect to a body surface (45) so as to define a duct (47) which, in use, is got through by air (F1) that will form said airflow (F3);
wherein at least one portion (48) of said wing (43) is movable with respect to said body surface (45) so as to vary the geometry of said duct (47) and, consequently, vary the direction of said airflow (F3).

2. **-** The motor vehicle according to claim 1, wherein said at least one portion (48) is rotatable about an axis (H) parallel to a pitch axis (Y) of the motor vehicle (1).

3. **-** The motor vehicle according to claim 1 or 2, wherein said adjustment system (40) comprises a bridge structure (41) defined by said wing (43) and by two support legs (42), which couple side ends of said wing (43) to said body (2).

4. **-** The motor vehicle according to claim 3, wherein said bridge structure (41) forms part of a front end of the motor vehicle (1).

5. **-** The motor vehicle according to claim 3 or 4, wherein said bridge structure (41) forms part of a front bumper of the motor vehicle (1).

6. **-** The motor vehicle according to any one of claims 1 to 3, wherein said body surface (46) is defined by an area of said roof surface (23).

7. **-** The motor vehicle according to claim 6, wherein said area is defined by a rear end of said roof surface (23).

8. **-** The motor vehicle according to any one of the preceding claims, wherein said aerodynamic element (25) has a position and a contour which are invariant.

9. **-** The motor vehicle according to any one of the preceding claims, wherein said uncovered volume (8) is directly bounded, at the front, by said rear edge (24) and, at the back, by said aerodynamic element (25).

10. - The motor vehicle according to any one of the preceding claims, wherein said aerodynamic element (25) is defined by an airfoil arranged in a position that is vertically spaced apart from a further body surface (32).
